# EUROPEAN PATENT APPLICATION

(11) **EP 1 291 658 A1**
(43) Date of publication of application: **12.03.2003**
(21) Application number: 01307602.1
(22) Date of filing: 07.09.2001
(51) Int. Cl.: G01N 35/10, B01L 3/02, G01N 35/00

(54) **Pipette head apparatus for robot**

(71) Applicant: The Automation Partnership (Cambridge) Limited, Royston, Hertfordshire SG8 5WY (GB)
(72) Inventor: Bargh, Adrian Neil, London, N8 7LS (GB)
(74) Representative: Haley, Stephen

(57) **Abstract**

A head apparatus (10) for attachment, in use, to a robot head. The head apparatus (10) comprises: a drive motor and a plunger assembly arranged to be driven, in use, by the drive motor such that, in use, the plunger assembly moves within a cylinder to generate a pressure differential therein with respect to the exterior of the cylinder. A clamp assembly (20) for removably clamping, in use, a pipetting head (21) to the cylinder, the clamp assembly (20) and plunger assembly are arranged such that, in use, the plunger assembly can be driven by the drive motor to a position in which it engages with the clamping assembly to detach the pipetting head (21) therefrom.

## Description

The present invention relates to an apparatus for pipetting fluids and which is for use with automated machinery.

There are many chemical and biochemical processes that it is desirable to automate. However, for many such processes there are various different stages which make it difficult to make such processes without the provision of a considerable amount of expensive automated machinery. In view of this, there have been attempts to provide multipurpose automated machines in systems for automating such processes. In such machines a single automated machine is used for a variety of different functions, such as movement of flasks, arrangement of samples, dispensing of chemicals, etc. With such systems the automated machinery generally has a single movable clamping head which can attach components which perform the different functions. For example, the head may be able to clamp on to sample trays to move them, have a component for opening doors, or have a liquid sampling/dispensing component, and may be able to select one of these components, attach itself to this, perform an operation, and then return it and place it back in the associated holder.

With such systems there are, however, considerable engineering constraints in terms of the weight of the removable component, its overall size, and its ease of operation. If the removable component is too heavy or too bulky the automated machinery must have increased clearances and higher power motors in order to operate, which can offset any of the benefits achieved by using such an approach. This is particularly true for any liquid dispensing or sampling component. Such a component must have some form of pump mechanism associated therewith in order to generate increased or reduced pressure differentials so that a liquid sample can either be drawn up into it or dispensed from it. It must also have, in most cases, the ability to remove and replace automatically at least some of its sampling/dispensing components so that cross-contamination between differing liquids that it may handle will not occur. This means that it is extremely difficult to produce a removable head that has a weight and size that is capable of being picked up and handled by automated machinery.

The present invention seeks to provide a liquid sampling/dispensing head for use with automated machinery which is lightweight and compact in order to overcome some of the above problems.

According to the present invention there is provided a head apparatus for attachment, in use, to a robot head, the head apparatus comprising:
a drive motor;
a plunger assembly arranged to be driven, in use, by the drive motor such that, in use, the plunger assembly moves within a cylinder to generate a pressure differential therein with respect to the exterior of the cylinder;
a clamp assembly for removably clamping, in use, a pipetting head to the cylinder, the clamp assembly and plunger assembly being arranged such that, in use, the plunger assembly can be driven by the drive motor to a position in which it engages with the clamping assembly to detach the pipetting head therefrom.

The plunger assembly may be arranged such that its clamping assembly engaging position is at one extreme of its range of motion. The plunger assembly may also be arranged such that it engages with the clamping assembly to ensure fluid-tight engagement of the removable pipetting head with the clamping assembly. A sensor may be provided on the head apparatus to ensure fluid-tight engagement of the pipetting head with the clamping assembly and cylinder is provided in use. The drive motor may drive the plunger assembly by engagement with a threaded screw drive mechanism.

The present invention provides a system in which it is necessary only to have a single operating motor which can generate the necessary pressure differentials to enable the head to sample and dispense liquids as well as remove and retain replace wall components. It also provides means for determining that replaceable components are connected correctly so that erroneous sampling and dispensing does not occur and that the overall operation of the automated machinery in which the apparatus of the invention is used is reliable and needs little human intervention.

An example of the present invention will now be described with reference to the accompanying drawings, in which:
Figure 1 is a plan view of an automated system employing a head apparatus according to the present invention;
Figure 2 is a schematic view showing a holder for the head apparatus for the invention with a head apparatus according to the invention held therein;
Figure 3 is a schematic view of a head apparatus according to the invention with are movable sampling/dispensing component and its associated retaining mechanism; and
Figure 4 is an exploded schematic view of the internal components of an example head apparatus according to the invention.

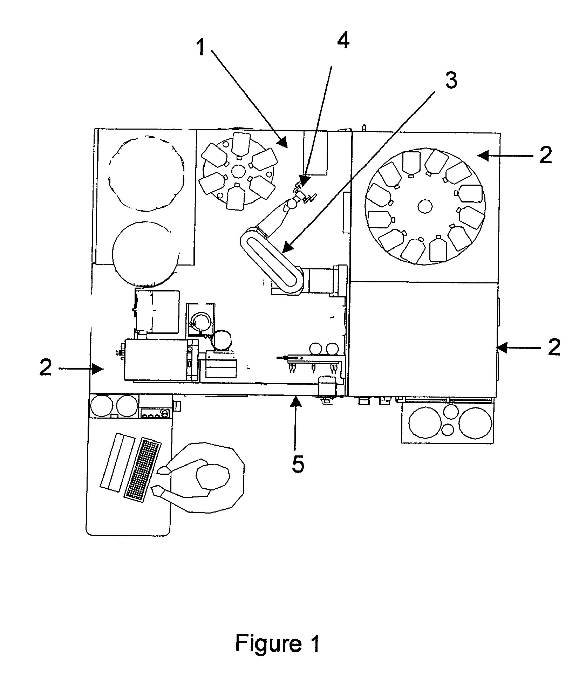

Referring to Figure 1, a system employing the head apparatus of the invention operates within an enclosure 1 which has various storage and operation regions 2,5. The system shown is a system for growing live cell cultures and therefore has regions 2 which contain incubators, regions 2 which contain chemical supplies, and other regions for outputting samples and housing control and automation machinery. Within the system is an automated robot 3 with a clamping head 4. The head apparatus 4 has a clamping assembly (not shown) which enables it to connect with sample trays, sample flasks, and supply-contain components in order to automatically maintain the processes that are being performed by the system. The head apparatus 10 of the present invention is contained within a holding region 5 and is shaped so that it can be retained by the clamping head 4 on the robot 3 and removed from the holding region 5 when needed to sample and/or dispense fluids from anywhere within the system of Figure 1.

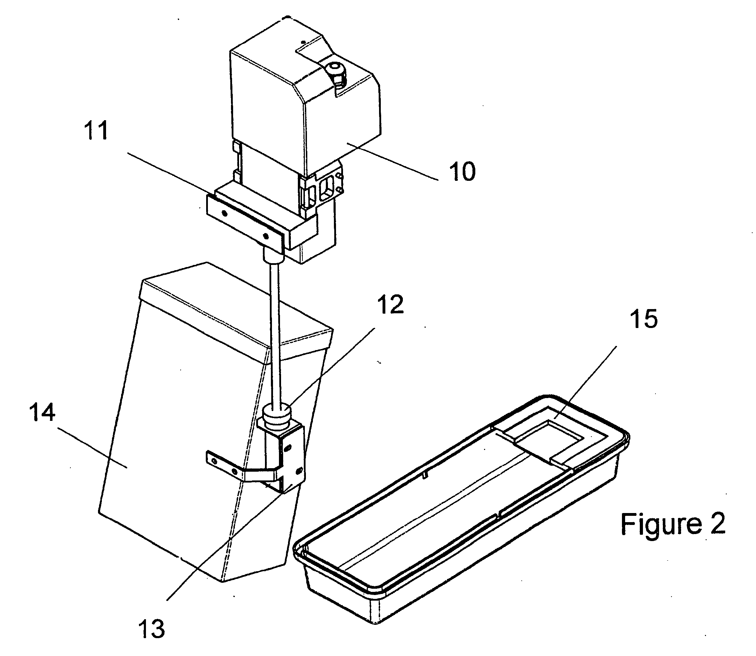

Figure 2 shows in more detail components that can be found in the region 5 of Figure 1. A head apparatus 10 according to the present invention is held in a stand 11 arranged to be connected to a support (not shown) in use. The stand 11 also has a second holding component 12 with a bracket 13 for supporting a pipette storage bin 14 which holds fresh sampling and dispensing heads for access by the head apparatus 10 in use. Also associated with the stand 11 is a used pipette bin 15 which receives, in use, used pipette heads from the head apparatus 10.

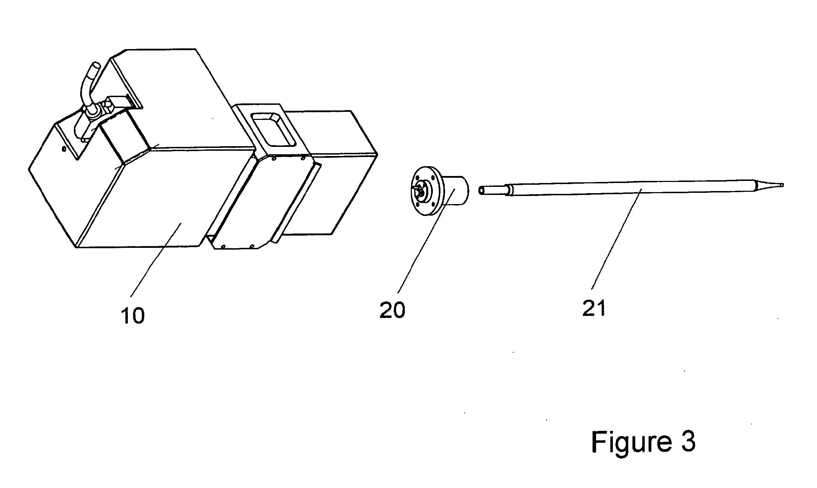

Figure 3 shows the head apparatus 10 of the invention together with a clamp assembly 20 and removable pipette head 21. The clamp assembly 20 is, in use, held within the head apparatus 10 and is arranged such that, in use, pipette heads 21 can be moved into it and a clamp automatically upon insertion. In operation of the overall system this will occur by movement of the head apparatus 10 by the robot 3 to a pipette head supply bin 14, at which point the head apparatus 10 and associated clamping assembly 20 is driven into the bin 14 to engage with a pipette head 21. As clamping occurs automatically upon insertion of the pipette head 21 into the clamping assembly 20 the robot 3 can then move the head assembly 10 away from the bin and retain a pipette head 21.

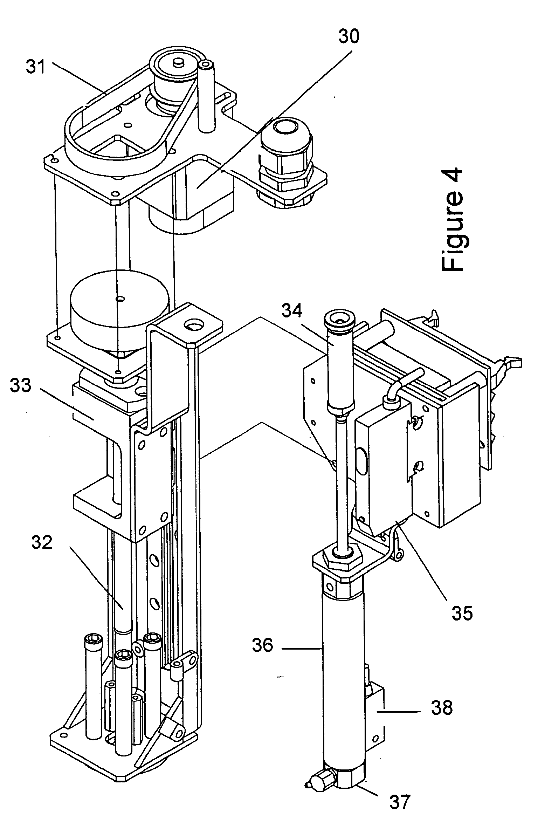

Figure 4 is an exploded view which shows the internal components of the head apparatus 10 of the earlier figures. Within the head apparatus 10 there is provided a motor 30 which, in use, drives a drive belt 31 to rotate a screw-threaded drive mechanism 32 the drive mechanism 32 engages with a plunger clamp 33 which is attached, in use, to a plunger 34. The plunger 34 has an optional sensor component 35 associated therewith in order to determine the position of the plunger 34 to improve overall reliability if control of the head apparatus 10. The plunger 34 is slidably retained within a cylinder 36 such that, in use, a pressure differential at the tip 37 of the cylinder 36 is generated. The tip 37 of the cylinder 36 is attached, in use, to the clamping assembly 20 of figure 3 and the end portion of the plunger 34 that, in its maximum extension position, is capable of being moved to the tip 37 of the cylinder 36 is arranged so that it engages with the clamping assembly 20 to actuate it to release a pipette head 21 attached thereto.

In operation the head apparatus 10 receives control instructions to drive the drive motor 30, which, in turn, moves the assembly and plunger 34. This generates a pressure differential within the cylinder 36 that enables fluid either to be drawn up into the pipette head 21 or dispensed therefrom, depending upon the direction of movement of the plunger 34. Once a pipette head 21 has been used the head apparatus 10 is moved to be placed over the bin 15 of figure 2 and the plunger 34 driven by the drive motor 30 such that it extends to the tip 37, engages with the clamping assembly 20 and actuates the clamping assembly 20 to push the pipette head 21 out of engagement with the clamping assembly 20, dropping the pipette head 21 into the bin 15.

An optional sensor 38 is provided at the tip 37 in order to detect whether or not a pipette head 21 is connected to the head apparatus 10 and to ensure adequate, fluid-time connection so that the plunger 34, cylinder 36 and pipette head 21 operate correctly.

The assembly of the present invention requires only a single motor and a simply control thereof to provide fluid sampling and dispensing as well as to provide the release and connection mechanisms associated with the use of a removable pipette head 21. This reduces the overall weight of the head apparatus 10 as well as reducing its size.

## Claims

1. A head apparatus for attachment, in use, to a robot head, the head apparatus comprising:
a drive motor;
a plunger assembly arranged to be driven, in use, by the drive motor such that, in use, the plunger assembly moves within a cylinder to generate a pressure differential therein with respect to the exterior of the cylinder;
a clamp assembly for removably clamping, in use, a pipetting head to the cylinder, the clamp assembly and plunger assembly being arranged such that, in use, the plunger assembly can be driven by the drive motor to a position in which it engages with the clamping assembly to detach the pipetting head therefrom.

2. An apparatus according to claim 1, wherein the plunger assembly is arranged such that its clamping assembly engaging position is at one extreme of its range of motion.

3. An apparatus according to claim 1 or claim 2 wherein the plunger assembly is arranged such that it engages with the clamping assembly to ensure fluid-tight engagement of the removable pipetting head with the clamping assembly.

4. An apparatus according to any preceding claim, wherein a sensor is provided on the head apparatus to ensure fluid-tight engagement of the pipetting head with the clamping assembly and cylinder is provided in use.

5. An apparatus to any preceding claim, wherein the drive motor drives the plunger assembly by engagement with a threaded screw drive mechanism.
